# EUROPEAN PATENT SPECIFICATION

(11) **EP 4 121 850 B1**
(45) Date of publication and mention of the grant of the patent: **14.02.2024**
(21) Application number: 20725485.5
(22) Date of filing: 08.05.2020
(51) Int. Cl.: G06F 9/38, G06F 9/50

(54) **PROCESSING DEVICE FOR A PARALLEL COMPUTING SYSTEM AND METHOD FOR PERFORMING COLLECTIVE OPERATIONS**
VERARBEITUNGSVORRICHTUNG FÜR EIN PARALLELES RECHNERSYSTEM UND VERFAHREN ZUR DURCHFÜHRUNG KOLLEKTIVER OPERATIONEN
DISPOSITIF DE TRAITEMENT POUR UN SYSTÈME INFORMATIQUE PARALLÈLE ET PROCÉDÉ POUR EFFECTUER DES OPÉRATIONS COLLECTIVES

(43) Date of publication of application: 25.01.2023
(73) Proprietor: Huawei Technologies Co., Ltd., Shenzhen, Guangdong 518129, (CN)
(72) Inventor: MARGOLIN, Alex, 80992 Munich (DE); BELKAR, Ben-Shahar, 80992 Munich (DE); AMOUYAL, Solal, 80992 Munich (DE)
(74) Representative: Gill Jennings & Every LLP
(86) International application number: PCT/EP2020/062872
(87) International publication number: WO 2021/223879

(56) References cited:
- WO-A1-03/009134
- US-A1- 2008 183 779
- US-B1- 6 324 643

## Description

### TECHNICAL FIELD

The present disclosure relates to data processing in general. More specifically, the present disclosure relates to a processing device for a parallel computing system comprising a plurality of such processing devices for performing collective operations, as well as a corresponding method.

### BACKGROUND

Collective operations, which have become an important part of parallel computing frameworks, describe common patterns of communication and computation in parallel computing systems, where data is simultaneously sent to and/or received from a plurality of processing devices (also referred to as processing nodes). As collective operations usually require communication from all N processing devices of a parallel computing system, up to N² communication steps may be necessary, thereby resulting in a large latency for a collective operation involving a large number of processing devices. US2008/183779A1 is part of the prior-art.

### SUMMARY

It is an objective of the present disclosure to provide a processing device for a parallel computing system comprising a plurality of processing devices for performing collective operations with a reduced latency, as well as a corresponding parallel computing method.

The foregoing and other objectives are achieved by the subject matter of the independent claims. Further implementation forms are apparent from the dependent claims, the description and the figures.

According to a first aspect, a processing device for a parallel computing system is provided, wherein the parallel computing system comprises a plurality of processing devices for performing an application, including one or more collective operations. The processing device is configured to obtain a local processing result, wherein a global processing result of a collective operation depends on the local processing results of the plurality of processing devices. The processing device is further configured to distribute the local processing result of the processing device to one or more of the other processing devices, if: (a) it is certain that the global processing result of the collective operation is based only on, i.e. uniquely determined by the local processing result of the processing device irrespective of the local processing results of the other processing devices; or (b) a likelihood that the global processing result of the collective operation is based only on, i.e. uniquely determined by the local processing result of the processing device is larger than a likelihood threshold value; or (c) it is certain that the global processing result of the collective operation is based only on, i.e. uniquely determined by the local processing result of the processing device and a further local processing result of a further processing device of the plurality of processing devices irrespective of the local processing results of the other processing devices.

As used herein, the global processing result is the final result of the collective operation, whereas a local processing result of a processing device is a result initially known to the respective processing device only.

Thus, advantageously, a processing device for a parallel computing system for performing collective operations with a reduced latency is provided.

In a further possible implementation form of the first aspect, the processing device is further configured to broadcast the local processing result of the processing device to all the other processing devices, only if it is certain that the global processing result of the collective operation is based only on, i.e. uniquely determined by the local processing result of the processing device.

In a further possible implementation form of the first aspect, the collective operation is a logical or bitwise "AND" operation or a logical or bitwise "OR" operation.

In a further possible implementation form of the first aspect, the collective operation is a logical or bitwise "XOR" operation, wherein the processing device is further configured to broadcast the local processing result of the processing device to the other processing devices, if it is certain that the global processing result of the collective operation is based only on, i.e. uniquely determined by the local processing result of the processing device and the further local processing result of the further processing device.

In a further possible implementation form of the first aspect, the processing device is further configured to receive the further local processing result from the further processing device and to perform the logical or bitwise "XOR" operation based on the local processing result of the processing device and the further local processing result of the further processing device.

In a further possible implementation form of the first aspect, the processing device is configured to distribute the local processing result of the processing device to a selected subset of the other processing devices for performing the collective operation only with the selected subset of the other processing devices, wherein, for each processing device of the selected subset of the other processing devices, a likelihood that the global processing result of the collective operation is based only on, i.e. uniquely determined by the local processing result of the processing device is larger than a likelihood threshold value. Thus, advantageously, only the important processing nodes may be selected for performing the collective operation, thereby further improving the latency.

In a further possible implementation form of the first aspect, the parallel computing system is configured to adjust the selected subset during run-time of the application. Thus, advantageously, the set of important processing devices may be adjusted depending on the state of the parallel computing system.

In a further possible implementation form of the first aspect, the processing device is configured to store for each collective operation of the application the global processing result of the collective operation and/or an identifier of the processing device providing the global processing result of the collective operation.

In a further possible implementation form of the first aspect, the processing device is configured to determine the likelihood that the global processing result of the collective operation is based only on, i.e. uniquely determined by the local processing result of the processing device based on a comparison between the local processing result and one or more global processing results recorded for one or more preceding collective operations of the application Thus, advantageously, the global processing results of earlier collective operations may be used for determining the important processing devices.

In a further possible implementation form of the first aspect, the collective operation is a maximum operation for obtaining a maximum of the local processing results of the plurality of processing devices or a minimum operation for obtaining a minimum of the local processing results of the plurality of processing devices.

In a further possible implementation form of the first aspect, the processing device is configured to execute an iterative loop of operations and to terminate, i.e. exit the iterative loop based on a conditional statement depending on the global processing result of the collective operation.

In a further possible implementation form of the first aspect, the processing device is configured to broadcast the local processing result of the processing device to all the other processing devices, if it is certain that the global processing result of the collective operation is based only on, i.e. uniquely determined by the local processing result of the processing device and the global processing result of the collective operation being equal to the local processing result triggers the processing device to terminate the iterative loop.

In a further possible implementation form of the first aspect, the processing device is configured to store for the iterative loop the number of iterations before terminating the iterative loop and/or a threshold value defined by the conditional statement for terminating the iterative loop.

In a further possible implementation form of the first aspect, for each iteration of the iterative loop, the processing device is configured to determine a likelihood that the conditional statement of the iterative loop will be fulfilled in a further iteration of the iterative loop, wherein the processing device is configured to broadcast the local processing result of the processing device to all the other processing devices and to terminate the iterative loop, if the likelihood that the conditional statement will be fulfilled in a further iteration of the iterative loop is larger than a likelihood threshold value.

In a further possible implementation form of the first aspect, the processing node is configured to determine the likelihood that the conditional statement of the iterative loop will be fulfilled in a further iteration of the iterative loop based on the stored number of iterations for terminating one or more preceding iterative loops.

In a further possible implementation form of the first aspect, in case the conditional statement of the iterative loop is not fulfilled in a further iteration of the iterative loop, the processing device is configured to continue executing the iterative loop, if the likelihood that the conditional statement will be fulfilled in a further iteration of the iterative loop is larger than a likelihood threshold value.

In a further possible implementation form of the first aspect, the collective operation is a sum operation of the plurality of local processing results.

In a further possible implementation form of the first aspect, the collective operation is a reduce operation for providing the global processing result at a selected root processing device of the plurality of processing devices or an allreduce operation for providing the global processing result at all of the plurality of processing devices.

According to a second aspect, a parallel computing system comprising a plurality of processing devices according to the first aspect and any one of the implementation forms of the first aspect is provided.

In a possible implementation form of the second aspect, the plurality of processing devices of the parallel computing system are configured to define a tree topology.

According to a third aspect, a method for performing an application, including one or more collective operations, in a parallel computing system having a plurality of processing devices is provided. For each processing device, the method comprises the steps of: obtaining a local processing result, wherein a global processing result of a collective operation depends on one or more of the local processing results of the plurality of processing devices; and distributing the local processing result of the processing device to one or more of the other processing devices, if: (a) it is certain that the global processing result of the collective operation is based only on, i.e. uniquely determined by the local processing result of the processing device irrespective of the local processing results of the other processing devices; or (b) a likelihood that the global processing result of the collective operation is based only on, i.e. uniquely determined by the local processing result of the processing device is larger than a likelihood threshold value; or (c) it is certain that the global processing result of the collective operation is based only on, i.e. uniquely determined by the local processing result of the processing device and a further local processing result of a further processing device of the plurality of processing devices irrespective of the local processing results of the other processing devices.

The method according to the third aspect of the present disclosure can be performed by the processing device according to the first aspect of the present disclosure and the parallel computing system according to the second aspect of the present disclosure. Further features of the method according to the third aspect of the present disclosure result directly from the functionality of the processing device according to the first aspect of the present disclosure and the parallel computing system according to the second aspect of the present disclosure and their different implementation forms described above and below.

Embodiments of the present disclosure can be implemented in hardware and/or software.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 is a diagram illustrating a conventional parallel computing system performing a collective operation;
Fig. 2 is a diagram illustrating a parallel computing system according to an embodiment performing a collective operation;
Fig. 2a is a diagram illustrating a processing device for a parallel computing system according to an embodiment;
Fig. 3 is a diagram illustrating a conventional parallel computing system performing a collective operation;
Fig. 4 is a diagram illustrating a parallel computing system according to an embodiment performing a collective operation;
Fig. 5 is a diagram illustrating a conventional parallel computing system performing a collective operation;
Fig. 6 is a diagram illustrating a parallel computing system according to an embodiment performing a collective operation;
Fig. 7 illustrates an iterative loop including a collective operation implemented by a conventional parallel computing system;
Fig. 8 illustrates an iterative loop including a collective operation implemented by a parallel computing system according to an embodiment; and
Fig. 9 is a flow diagram illustrating a method according to an embodiment.

In the following, identical reference signs refer to identical or at least functionally equivalent features.

### DETAILED DESCRIPTION OF EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

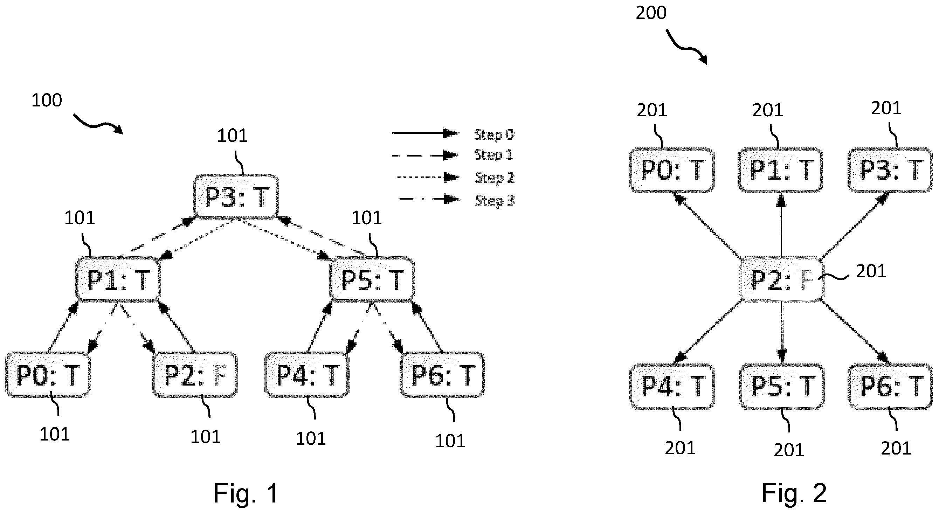

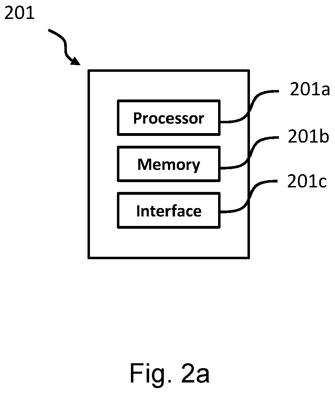

Figure 1 is a diagram illustrating a conventional parallel computing system 100 comprising a plurality of processing devices or nodes 101 configured to perform a collective operation. Figure 2 is a diagram illustrating a parallel computing system 200 according to an embodiment comprising a plurality of processing devices 201 according to an embodiment configured to perform or execute an application, including one or more collective operations. Figure 2a is a diagram illustrating an exemplary embodiment of a processing device 201.

As illustrated in Figure 2a, the processing device 201 may comprise a processor 201a for processing data and providing a processing result. The processing device 201 further comprises a non-transitory memory 201b for storing and retrieving data and a communication interface 201c for exchanging data, for instance, with the other processing devices 201 of the parallel computing system 200 shown in Figure 2. The processor 201a may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The non-transitory memory 201b may be configured to store executable program code which, when executed by the processor 201a, causes the processing device 201 to perform the functions and methods described herein. The communication interface 201c may comprise a wired or wireless communication interface 201c. The plurality of processing devices 201 of the parallel computing system 200 may be coupled for data communications by a wired and/or wireless data communication network and may share resources, such as memory, computer processors, input/output bandwidth, and the like. In an embodiment, the plurality of processing devices 201 of the parallel computing system 200 may define a tree communication topology.

A collective operation is a concept in parallel computing, according to which data is simultaneously sent to or received from many processing nodes, such as the processing devices 201 of the parallel computing system 200. A "broadcast operation" is an example of a collective operation for moving data among the plurality of processing devices 201. A "reduce operation" is an example of a collective operation that executes arithmetic or logical functions on data distributed among the plurality of processing devices 201. In an embodiment, the parallel computing system 200 may implement the Message Passing Interface (MPI) framework, i.e. a known parallel communications library for providing data communications between the plurality of processing devices 201 of the parallel computing system 200. Although in the following MPI terminology may be used for ease of explanation, MPI as such is not a requirement or limitation of the various embodiments disclosed herein.

As will be described in more detail further below, generally, a processing device 201 of the parallel computing system 200 is configured to obtain a local processing result, wherein a global processing result of the collective operation depends on the local processing results of the plurality of processing devices 201. Thus, as used herein, the global processing result is the final result of the collective operation, whereas a local processing result is a result initially known to, i.e. available at the respective processing device 201 only. For instance, each processing device 201 may be configured to perform a local data processing operation for obtaining the local processing result. A local processing result may be, for instance, an integer value, a real value, a logical "TRUE" or "FALSE" value or the like.

The processing device 201 of the parallel computing system 200 is further configured to distribute the local processing result of the processing device 201 to one or more of the other processing devices 201, if one of the following conditions is met: (a) it is certain that the global processing result of the collective operation is based only on, i.e. uniquely determined by the local processing result of the processing device 201 irrespective of the local processing results of the other processing devices 201; or (b) a likelihood that the global processing result of the collective operation is based only on, i.e. uniquely determined by the local processing result of the processing device 201 is larger than a likelihood threshold value; or (c) it is certain that the global processing result of the collective operation is based only on, i.e. uniquely determined by the local processing result of the processing device 201 and a further local processing result of a further processing device of the plurality of processing devices 201 irrespective of the local processing results of the other processing devices 201. To verify whether one of these conditions (a), (b) or (c) is met, the processing device 201 is configured to check whether: (a) it is certain that the global processing result of the collective operation is based only on, i.e. uniquely determined by the local processing result of the processing device 201 irrespective of the local processing results of the other processing devices 201; (b) a likelihood that the global processing result of the collective operation is based only on, i.e. uniquely determined by the local processing result of the processing device 201 is larger than a likelihood threshold value; or (c) it is certain that the global processing result of the collective operation is based only on, i.e. uniquely determined by the local processing result of the processing device 201 and a further local processing result of a further processing device of the plurality of processing devices 201 irrespective of the local processing results of the other processing devices 201.

In the embodiment shown in Figure 2, the plurality of processing devices 201 of the parallel computing system 200 are configured to perform a reduce or allreduce operation in the form of a logical or bitwise "AND" operation or a logical or bitwise "OR" operation, such as the MPI_LAND, MPI_BAND, MPI_LOR and the MPI_BOR operation. As can be taken from Figure 1, in the conventional parallel computing system 100, such an operation requires several communication steps (in the example of Figure 1, four steps) between the plurality of processing nodes 101 for distributing local results (in the example of Figure 1, a "TRUE" or "FALSE" value) among the plurality of processing nodes 101.

Instead of distributing the local processing results, e.g. the "TRUE" or "FALSE" values, each processing device, i.e. node 201 of the parallel computing system 200 of Figure 2 determines whether it is certain that the global processing result of the collective operation is based only on the local processing result of the processing device 201, i.e. if above condition (a) is met. For instance, for the case of a collective operation in the form of a logical or bitwise "AND" operation, such as the MPI_LAND or the MPI_BAND operation, the processing device "P2" based on its local processing result, i.e. a "FALSE" value, can verify that the global processing result of the logical "AND" operation is uniquely determined by its "FALSE" value, i.e. that the global processing result is a "FALSE" value as well. Likewise, for a logical or bitwise "OR" operation, such as the MPI_LOR or the MPI_BOR operation, the processing device 201 with a "TRUE" value as its local processing result "knows" that the global processing result of the collective operation is a "TRUE" value as well.

In case the processing device P3 knows that the global processing result of the collective operation is based only on, i.e. uniquely determined by its local processing result, the processing device P3, as illustrated in Figure 2, is configured to broadcast its local processing result, i.e. its "FALSE" value, to the other processing devices P4, P5, P6 for completing the collective operation. In an embodiment, the broadcast of the local processing result from the processing device P3 may override all other communication performed by the other processing devices. For example, as soon as the processing device P0 receives the "false" value from the processing device P3, the reduction collective communication may be halted and replaced by a conventional broadcast operation.

Thus, the embodiment shown in Figure 2 can be considered to transform a reduction collective operation into a broadcast operation. In an embodiment, this may include implementing different ranks of priorities of communication to enable a specific communication to override another. Moreover, in case of a broadcast operation, the final returned value, i.e. the global processing result is certain and therefore each processing device 201 may continue with its own work as soon as it receives this information.

In another embodiment, the plurality of processing devices 201 of the parallel computing system 200 are configured to perform a reduce or allreduce operation in the form of a logical or bitwise "XOR" operation, such as the MPI_LXOR and the MPI_BXOR operation. In this embodiment, the processing node 201 is configured to broadcast its local processing result, such as a "TRUE" or "FALSE" value, to the other processing devices 201, if it is certain that the global processing result is based only on, i.e. uniquely determined by the local processing result of the processing device and a further local processing result of a further processing device 201. For instance, in the example shown in Figure 2, the processing device P2 may obtain from the further processing device P0 its "TRUE" value and verify that the global processing result of the collective operation is based only on, i.e. uniquely determined by the "FALSE" value of the processing device P2 and the "TRUE" value of the processing device P0. Thus, in an embodiment, the processing device P2 (being an example for each processing device 201) is further configured to receive the further local processing result from the processing device P0 and to perform the logical or bitwise "XOR" operation based on its local processing result (i.e. "FALSE" value) and the further local processing result (i.e. "TRUE" value) of the processing device P0.

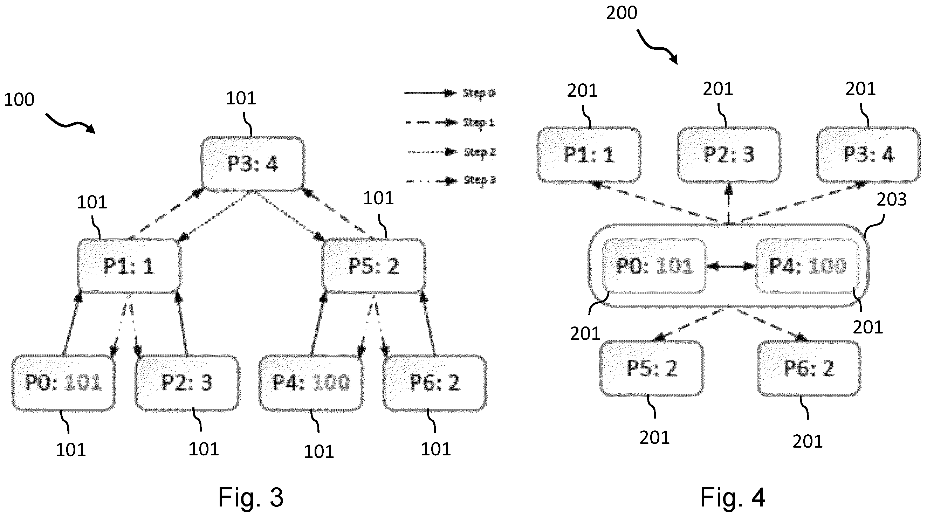

Figure 3 is a diagram illustrating a conventional parallel computing system 100 comprising a plurality of processing nodes 101 configured to perform a collective operation in the form of a maximum (or minimum) operation, while Figure 4 is a diagram illustrating an embodiment of the parallel computing system 200 for performing such a collective maximum operation or a minimum operation, such as MPI_MAX or MPI_MIN.

As can be taken from Figure 3, in the conventional parallel computing system 100, such a maximum or minimum operation requires several communication steps (in the example of Figure 3, four steps) between the plurality of processing nodes 101 for distributing local the results (in the example of Figure 3, integer values) among the plurality of processing nodes 101. Instead of distributing the local results, e.g. the integer values, each processing device, i.e. node 201 of the parallel computing system 200 of Figure 4 determines whether a likelihood that the global processing result of the collective maximum (or minimum) operation is based only on, i.e. uniquely determined by its local processing result, i.e. its integer value, is larger than a likelihood threshold value, i.e. above condition (b). In an embodiment, the processing device 201 of the parallel computing system 200 shown in Figure 4 is configured to determine the likelihood that the global processing result of the collective operation is based only on, i.e. uniquely determined by its local processing result based on a comparison between its local processing result and one or more global processing results of the collective maximum (or minimum) operation recorded for one or more preceding collective maximum (or minimum) operations of the application performed by the parallel computing system 200. Thus, in an embodiment, each processing node 201 is configured to store for each collective operation of the application the global processing result, e.g. the result of the collective maximum (or minimum) operation, and/or an identifier of the processing device 201 providing the global processing result, i.e. the maximum (or minimum) value of the collective operation.

In case a processing device 201, such as, by way of example, the processing device P4 illustrated in Figure 4, determines that the likelihood that the global processing result of the collective maximum (or minimum) operation is based only on, i.e. uniquely determined by its local processing result, i.e. its integer value of "100", is larger than a likelihood threshold value, the processing device P4 is configured to distribute its local processing result, i.e. the integer value "100", only to a selected subset 203 of the other processing devices 201 for performing the collective operation with the selected subset 203 of the other processing devices 201. In the example shown in Figure 4, the selected subset 203, by way of example, includes the processing devices P0 and P4. As illustrated in Figure 4, once the selected subset 203 has been determined, the parallel computing system 200 may perform the maximum (or minimum) operation only with the processing devices 201 of the selected subset 203, i.e. the processing devices P0 and P4. Once the processing devices P0 and P4 of the selected subset have determined the global processing result of the maximum (or minimum) operation (in the example shown in Figure 4, the integer value "101" of the processing device P0), the global processing result, i.e. the integer value "101" may be shared with the other processing devices 201 outside of the selected subset 203. In an embodiment, the parallel computing system 200 may be configured to adjust the selected subset 203 of processing devices 201 during run-time of the application. As the relative size of the subset of "important" processing devices, i.e. nodes 201 grows smaller, the acceleration gets larger.

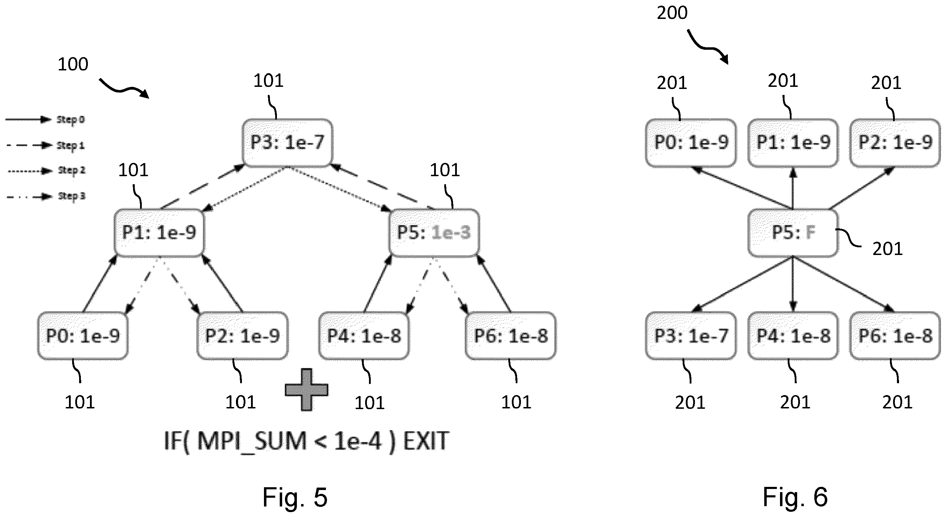

Figure 5 is a diagram illustrating a conventional parallel computing system 100 comprising a plurality of processing nodes 101 configured to perform an iterative loop with an exit condition depending on a collective reduce or allreduce operation in the form of a sum operation.

In many parallel computing applications, iterative schemes comprise the core of the overall algorithm. During the lifetime of a specific parallel computing application, the number of iterations varies mildly. Therefore, if a specific parallel computing application requires on average about 100 iterations at each step, it is very unlikely to have less than 80 at a specific step. However, conventionally, a blocking reduction operation is used at every iteration nonetheless, even if one can predict with near perfect certainty the outcome of the convergence test for the first 80 iterations. Furthermore, the local error value of a single process can be high enough to invalidate the global convergence test. This case is illustrated in Figure 5, where the blocking reduction operation will take place nonetheless, even if the processing device P5 knows from the start that the outcome of the following IF statement is certain.

Figure 6 is a diagram illustrating an embodiment of the parallel computing system 200 including the plurality of processing devices 201 according to an embodiment for performing an application comprising an iterative loop with an exit condition depending on a collective reduce or allreduce operation in the form of a sum operation, such as a MPI_SUM operation.

As can be taken from Figure 5, in the conventional parallel computing system 100, such a sum operation requires several communication steps (in the example of Figure, 5 four steps) between the plurality of processing nodes 101 for distributing the local results (in the example of Figure 5, real values) among the plurality of processing nodes 101. In the example shown in Figure 5, the iterative loop is terminated or exited, in case the global processing result of the collective operation is smaller than 1e-4.

Instead of distributing the local processing results, e.g. the real values, each processing device 201 of the parallel computing system 200 of Figure 6 is configured to determine whether the likelihood that the global processing result of the sum operation is based only on, i.e. uniquely determined by the local processing result of the processing device 201 is larger than a likelihood threshold value. In the embodiment shown in Figure 6, the processing device P5, by way of example, is advantageously configured to make use of the fact that its local processing result, i.e. the real value "1e-3", triggers the exit condition of the iterative loop by either broadcasting its real value "1e-3" and/or the information that the exit condition of the iterative loop is met to the other processing devices 201. In other words, the processing device P5 knows with certainty the outcome of the following if statement. Conventionally, the processing node P5 would wait for the allreduce communication operation to be finished, before executing the if statement. According to an embodiment, the allreduce operation is combined with the if statement. Therefore, since the processing device P5 knows with certainty the outcome of the if statement, it may be configured to broadcast a "False" to all other processing devices so that no conventional allreduce operation is required.

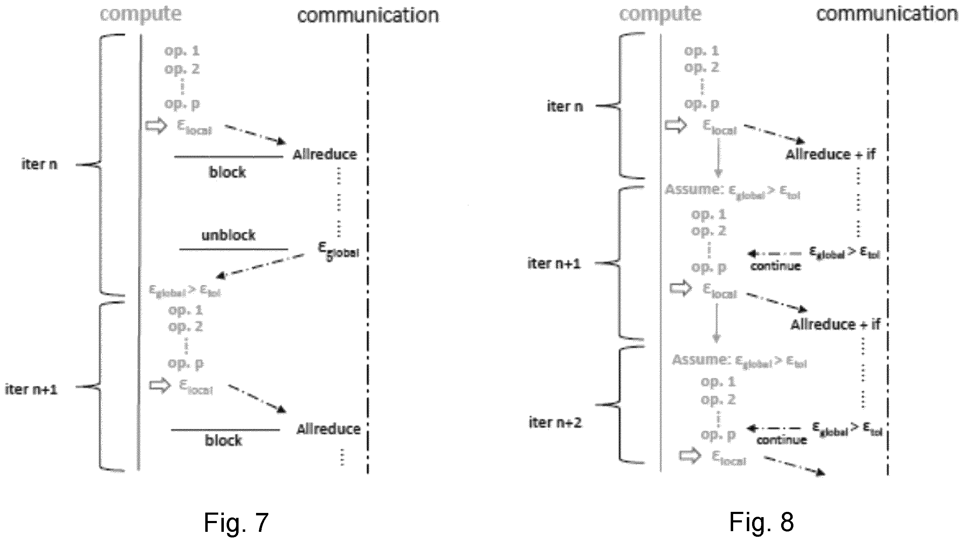

Figure 7 illustrates an iterative loop including a collective operation implemented by a conventional parallel computing system. Some serial (local to each processing node) operations are first conducted until a local error is computed. This local error is then distributed to other processing nodes using a blocking allreduce operation (here, blocking means that until the allreduce communication returns with the global value for each processing node, each local processing node is forbidden to progress with its own operation and waits for the final result instead). Once the allreduce operation is completed and each local processing node obtains the global error value, it compares it to the error threshold value. In the exemplary case shown in Figure 7, at the end of iteration n, the global error is larger than the error threshold value and another iteration is performed.

Figure 8 illustrates an iterative loop including a collective operation implemented by the parallel computing system 200 according to an embodiment including the plurality of processing devices 201 according to an embodiment. In the beginning, as in Figure 7, some serial operations are performed until the local error is obtained. However, in this case, the parallel computing system 200 is configured to combine the allreduce statement and the if statement into one operation to which each processing device calls and passes on its local error value. Thereafter, each processing device 201 may be configured to apply a branch prediction algorithm, i.e. each processing device 201 assumes that the global error will be larger than the error threshold value and resumes its work, starting again with the serial operations until the error is obtained. In the meantime, the Allreduce+if communication operation is taking place until it obtains the global error and compares it to the error threshold value. In this case, the initial assumption made by each processing device 201 (i.e. the global error is larger than the threshold error) is correct and the computation is allowed to continue. Thereafter, the local error is obtained by each processing device 201 and sent again to the combined allreduce+if operation. This iterative loop is repeated.

In an embodiment, each processing device 201 is configured to store for the iterative loop the number of iterations before terminating the iterative loop and/or a threshold value defined by the conditional statement for terminating the iterative loop. Moreover, in an embodiment, each processing device 201 may be configured to determine the likelihood that the conditional statement of the iterative loop is fulfilled in a further iteration of the iterative loop, wherein the processing device 201 is configured to broadcast the local processing result of the processing device 201 to the other processing devices 201 and to terminate the iterative loop, if the likelihood that the conditional statement is fulfilled in a further iteration of the iterative loop is larger than a likelihood threshold value. Thus, in an embodiment, the parallel computing system 200 including the plurality of processing devices 201 may implement a branch prediction algorithm. In an embodiment, each processing device 201 is configured to determine the likelihood that the conditional statement of the iterative loop is fulfilled in a further iteration of the iterative loop based on the number of iterations recorded for terminating one or more preceding iterative loops. In an embodiment, in case the conditional statement of the iterative loop is not fulfilled in a further iteration of the iterative loop, each processing device 201 may be further configured to continue executing the iterative loop, if the likelihood that the conditional statement is fulfilled in a further iteration of the iterative loop is larger than the likelihood threshold value.

Thus, in an embodiment, the parallel computing system 200 is configured to automatically recognize the blocking collective reduction call followed by a conditional statement on the returned reduced value as one global operation. This concatenation enables to take advantage of previously unused information to reduce the communication time. Moreover, as already described above, statistics may be gathered on the number of iterations required for the conditional statement to be activated. If the number of iterations is high enough, the blocking collective may be transformed into a non-blocking collective call, which will enable an overlap of communication and computation. Furthermore, branch prediction may be applied to the overall global collective reduction operation, i.e. the outcome of the conditional statement will be assumed to be false and the processing device 201 may resume with the computation of the next iteration while the communication is done simultaneously. If the conditional statement is found to be false as initially assumed, the processing device 201 is not interrupted and continues with its computation. In the other case where the conditional statement is true, the processing device 201 may retrace its step and exit the iterative scheme.

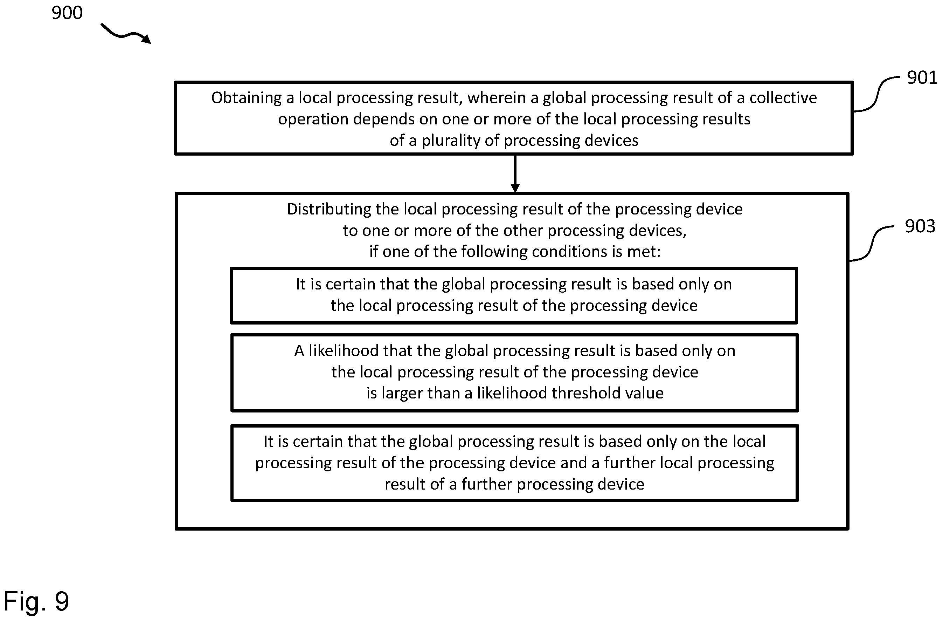

Figure 9 is a flow diagram illustrating a corresponding method 900 according to an embodiment for performing an application, including one or more collective operations in the parallel computing system 200. For each processing device 201, the method 900 comprises the steps of: obtaining 901 a local processing result, wherein a global processing result of a collective operation depends on one or more of the local processing results of the plurality of processing devices 201; and distributing 903 the local processing result of the processing device 201 to one or more of the other processing devices 201, if: (a) it is certain that the global processing result of the collective operation is based only on, i.e. uniquely determined by the local processing result of the processing device 201 irrespective of the local processing results of the other processing devices 201; or (b) a likelihood that the global processing result of the collective operation is based only on, i.e. uniquely determined by the local processing result of the processing device 201 is larger than a likelihood threshold value; or (c) it is certain that the global processing result of the collective operation is based only on, i.e. uniquely determined by the local processing result of the processing device 201 and a further local processing result of a further processing device 201 of the plurality of processing devices irrespective of the local processing results of the other processing devices.

The person skilled in the art will understand that the "blocks" ("units") of the various figures (method and apparatus) represent or describe functionalities of embodiments of the invention (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A processing device (201) for a parallel computing system (200), wherein the parallel computing system (200) comprises a plurality of processing devices (201) for performing an application, including one or more collective operations, wherein the processing device (201) is configured to:
obtain a local processing result, wherein a global processing result of a collective operation depends on the local processing results of the plurality of processing devices (201); and
distribute the local processing result of the processing device (201) to one or more of the other processing devices (201), if:
(a) it is certain that the global processing result of the collective operation is based only on the local processing result of the processing device (201), or
(b) a likelihood that the global processing result of the collective operation is based only on the local processing result of the processing device (201) is larger than a likelihood threshold value, or
(c) it is certain that the global processing result of the collective operation is based only on the local processing result of the processing device (201) and a further local processing result of a further processing device (201) of the plurality of processing devices (201).

2. The processing device (201) of claim 1, further configured to broadcast the local processing result of the processing device (201) to the other processing devices (201), if it is certain that the global processing result of the collective operation is based on the local processing result of the processing device (201).

3. The processing device (201) of claim 2, wherein the collective operation is a logical or bitwise "AND" operation or a logical or bitwise "OR" operation.

4. The processing device (201) of claim 1, wherein the collective operation is a logical or bitwise "XOR" operation, and wherein the processing device (201) is further configured to broadcast the local processing result of the processing device (201) to the other processing devices (201), if it is certain that the global processing result of the collective operation is based only on the local processing result of the processing device (201) and the further local processing result of the further processing device (201).

5. The processing device (201) of claim 4, further configured to receive the further local processing result from the further processing device (201) and to perform the logical or bitwise "XOR" operation based on the local processing result of the processing device (201) and the further local processing result of the further processing device (201).

6. The processing device (201) of claim 1, further configured to distribute the local processing result of the processing device (201) to a selected subset (203) of the other processing devices (201) for performing the collective operation with the selected subset (203) of the other processing devices (201), wherein, for each processing device (201) of the selected subset (203) of the other processing devices (201), a likelihood that the global result of the collective operation is based only on the local processing result of the processing device (201) is larger than a likelihood threshold value.

7. The processing device (201) of claim 6, wherein the parallel computing system (200) is configured to adjust the selected subset (203) during a run-time of the application.

8. The processing device (201) of claim 6 or 7, further configured to store, for each collective operation of the application, the global processing result of the collective operation and/or an identifier of the processing device (201) providing the global processing result of the collective operation.

9. The processing device (201) of claim 8, further configured to determine the likelihood that the global result of the collective operation is based only on the local processing result of the processing device (201) based on a comparison between the local processing result and one or more global processing results stored for one or more preceding collective operations of the application.

10. The processing device (201) of any one of claims 6 to 9, wherein the collective operation is a maximum operation for obtaining a maximum of the local processing results of the plurality of processing devices (201) or a minimum operation for obtaining a minimum of the local results of the plurality of processing devices (201).

11. The processing device (201) of any one of the preceding claims, further configured to execute an iterative loop and to terminate the iterative loop based on a conditional statement depending on the global processing result of the collective operation.

12. The processing device (201) of claim 11, further configured to broadcast the local processing result of the processing device (201) to the other processing devices (201), if it is certain that the global processing result of the collective operation is based only on the local processing result of the processing device (201) and the global processing result of the collective operation triggers the processing device (201) to terminate the iterative loop.

13. A parallel computing system (200) comprising a plurality of processing devices (201) according to any one of the preceding claims.

14. The parallel computing system (200) of claim 13, wherein the plurality of processing devices (201) are configured to define a tree topology.

15. A method (900) for performing an application, including one or more collective operations, in a parallel computing system (200) having a plurality of processing devices (201), wherein, for each processing device (201), the method (900) comprises the steps of:
obtaining (901) a local processing result, wherein a global processing result of a collective operation depends on one or more of the local processing results of the plurality of processing devices (201); and
distributing (903) the local processing result of the processing device (201) to one or more of the other processing devices (201), if:
(a) it is certain that the global processing result of the collective operation is based only on the local processing result of the processing device (201), or
(b) a likelihood that the global processing result of the collective operation is based only on the local processing result of the processing device (201) is larger than a likelihood threshold value, or
(c) it is certain that the global processing result of the collective operation is based only on the local processing result of the processing device (201) and a further local processing result of a further processing device (201) of the plurality of processing devices (201).

## Patentansprüche

1. Verarbeitungsvorrichtung (201) für ein paralleles Rechensystem (200), wobei das parallele Rechensystem (200) eine Vielzahl von Verarbeitungsvorrichtungen (201) zum Durchführen einer Anwendung, einschließlich einer oder mehrerer kollektiver Operationen, umfasst, wobei die Verarbeitungsvorrichtung (201) zu Folgendem konfiguriert ist:
Erlangen eines lokalen Verarbeitungsergebnisses, wobei ein globales Verarbeitungsergebnis einer kollektiven Operation von den lokalen Verarbeitungsergebnissen der Vielzahl von Verarbeitungsvorrichtungen (201) abhängt; und
Ausgeben des lokalen Verarbeitungsergebnisses der Verarbeitungsvorrichtung (201) an eine oder mehrere der weiteren Verarbeitungsvorrichtungen (201), wenn:
(a) sicher ist, dass das globale Verarbeitungsergebnis der kollektiven Operation nur auf dem lokalen Verarbeitungsergebnis der Verarbeitungsvorrichtung (201) basiert, oder
(b) eine Wahrscheinlichkeit, dass das globale Verarbeitungsergebnis der kollektiven Operation nur auf dem lokalen Verarbeitungsergebnis der Verarbeitungsvorrichtung (201) basiert, größer als ein Wahrscheinlichkeitsschwellenwert ist, oder
(c) sicher ist, dass das globale Verarbeitungsergebnis der kollektiven Operation nur auf dem lokalen Verarbeitungsergebnis der Verarbeitungsvorrichtung (201) und einem weiteren lokalen Verarbeitungsergebnis einer weiteren Verarbeitungsvorrichtung (201) der Vielzahl von Verarbeitungsvorrichtungen (201) basiert.

2. Verarbeitungsvorrichtung (201) gemäß Anspruch 1, ferner dazu konfiguriert, das lokale Verarbeitungsergebnis der Verarbeitungsvorrichtung (201) an die weiteren Verarbeitungsvorrichtungen (201) rundzusenden, wenn sicher ist, dass das globale Verarbeitungsergebnis der kollektiven Operation auf dem lokalen Verarbeitungsergebnis der Verarbeitungsvorrichtung (201) basiert.

3. Verarbeitungsvorrichtung (201) gemäß Anspruch 2, wobei die kollektive Operation eine logische oder bitweise "UND"-Operation oder eine logische oder bitweise "ODER"-Operation ist.

4. Verarbeitungsvorrichtung (201) gemäß Anspruch 1, wobei die kollektive Operation eine logische oder bitweise "XOR"-Operation ist und wobei die Verarbeitungsvorrichtung (201) ferner dazu konfiguriert ist, das lokale Verarbeitungsergebnis der Verarbeitungsvorrichtung (201) an die weiteren Verarbeitungsvorrichtungen (201) rundzusenden, wenn sicher ist, dass das globale Verarbeitungsergebnis der kollektiven Operation nur auf dem lokalen Verarbeitungsergebnis der Verarbeitungsvorrichtung (201) und dem weiteren lokalen Verarbeitungsergebnis der weiteren Verarbeitungsvorrichtung (201) basiert.

5. Verarbeitungsvorrichtung (201) gemäß Anspruch 4, ferner dazu konfiguriert, das weitere lokale Verarbeitungsergebnis von der weiteren Verarbeitungsvorrichtung (201) zu empfangen und die logische oder bitweise "XOR"-Operation basierend auf dem lokalen Verarbeitungsergebnis der Verarbeitungsvorrichtung (201) und dem weiteren lokalen Verarbeitungsergebnis der weiteren Verarbeitungsvorrichtung (201) durchzuführen.

6. Verarbeitungsvorrichtung (201) gemäß Anspruch 1, ferner dazu konfiguriert, das lokale Verarbeitungsergebnis der Verarbeitungsvorrichtung (201) an eine ausgewählte Teilmenge (203) der weiteren Verarbeitungsvorrichtungen (201) zum Durchführen der kollektiven Operation an der ausgewählten Teilmenge (203) der weiteren Verarbeitungsvorrichtungen (201) auszugeben, wobei für jede Verarbeitungsvorrichtung (201) der ausgewählten Teilmenge (203) der weiteren Verarbeitungsvorrichtungen (201) eine Wahrscheinlichkeit, dass das globale Ergebnis der kollektiven Operation nur auf dem lokalen Verarbeitungsergebnis der Verarbeitungsvorrichtung (201) basiert, größer als ein Wahrscheinlichkeitsschwellenwert ist.

7. Verarbeitungsvorrichtung (201) gemäß Anspruch 6, wobei das parallele Rechensystem (200) dazu konfiguriert ist, die ausgewählte Teilmenge (203) während einer Laufzeit der Anwendung anzupassen.

8. Verarbeitungsvorrichtung (201) gemäß Anspruch 6 oder 7, ferner dazu konfiguriert, für jede kollektive Operation der Anwendung das globale Verarbeitungsergebnis der kollektiven Operation und/oder eine Kennung der Verarbeitungsvorrichtung (201), die das globale Verarbeitungsergebnis der kollektiven Operation bereitstellt, zu speichern.

9. Verarbeitungsvorrichtung (201) gemäß Anspruch 8, ferner dazu konfiguriert, die Wahrscheinlichkeit, dass das globale Ergebnis der kollektiven Operation nur auf dem lokalen Verarbeitungsergebnis der Verarbeitungsvorrichtung (201) basiert, basierend auf einem Vergleich zwischen dem lokalen Verarbeitungsergebnis und einem oder mehreren globalen Verarbeitungsergebnissen, die für eine oder mehrere vorhergehende kollektive Operationen der Anwendung gespeichert wurden, zu bestimmen.

10. Verarbeitungsvorrichtung (201) gemäß einem der Ansprüche 6 bis 9, wobei die kollektive Operation eine Maximum-Operation zum Erlangen eines Maximums der lokalen Verarbeitungsergebnisse der Vielzahl von Verarbeitungsvorrichtungen (201) oder eine Minimum-Operation zum Erlangen eines Minimums der lokalen Ergebnisse der Vielzahl von Verarbeitungsvorrichtungen (201) ist.

11. Verarbeitungsvorrichtung (201) gemäß einem der vorhergehenden Ansprüche, ferner dazu konfiguriert, eine Iterationsschleife auszuführen und die Iterationsschleife basierend auf einer Bedingungsaussage abhängig vom globalen Verarbeitungsergebnis der kollektiven Operation zu beenden.

12. Verarbeitungsvorrichtung (201) gemäß Anspruch 11, ferner dazu konfiguriert, das lokale Verarbeitungsergebnis der Verarbeitungsvorrichtung (201) an die weiteren Verarbeitungsvorrichtungen (201) rundzusenden, wenn sicher ist, dass das globale Verarbeitungsergebnis der kollektiven Operation nur auf dem lokalen Verarbeitungsergebnis der Verarbeitungsvorrichtung (201) basiert, und das globale Verarbeitungsergebnis der kollektiven Operation die Verarbeitungsvorrichtung (201) dazu veranlasst, die Iterationsschleife zu beenden.

13. Paralleles Rechensystem (200), umfassend eine Vielzahl von Verarbeitungsvorrichtungen (201) gemäß einem der vorhergehenden Ansprüche.

14. Paralleles Rechensystem (200) gemäß Anspruch 13, wobei die Vielzahl von Verarbeitungsvorrichtungen (201) dazu konfiguriert ist, eine Baumtopologie zu definieren.

15. Verfahren (900) zum Durchführen einer Anwendung, einschließlich einer oder mehrerer kollektiver Operationen, in einem parallelen Rechensystem (200) mit einer Vielzahl von Verarbeitungsvorrichtungen (201), wobei das Verfahren (900) für jede Verarbeitungsvorrichtung (201) die folgenden Schritte umfasst:
Erlangen (901) eines lokalen Verarbeitungsergebnisses, wobei ein globales Verarbeitungsergebnis einer kollektiven Operation von einem oder mehreren der lokalen Verarbeitungsergebnisse der Vielzahl von Verarbeitungsvorrichtungen (201) abhängt; und
Ausgeben (903) des lokalen Verarbeitungsergebnisses der Verarbeitungsvorrichtung (201) an eine oder mehrere der weiteren Verarbeitungsvorrichtungen (201), wenn:
(a) sicher ist, dass das globale Verarbeitungsergebnis der kollektiven Operation nur auf dem lokalen Verarbeitungsergebnis der Verarbeitungsvorrichtung (201) basiert, oder
(b) eine Wahrscheinlichkeit, dass das globale Verarbeitungsergebnis der kollektiven Operation nur auf dem lokalen Verarbeitungsergebnis der Verarbeitungsvorrichtung (201) basiert, größer als ein Wahrscheinlichkeitsschwellenwert ist, oder
(c) sicher ist, dass das globale Verarbeitungsergebnis der kollektiven Operation nur auf dem lokalen Verarbeitungsergebnis der Verarbeitungsvorrichtung (201) und einem weiteren lokalen Verarbeitungsergebnis einer weiteren Verarbeitungsvorrichtung (201) der Vielzahl von Verarbeitungsvorrichtungen (201) basiert.

## Revendications

1. Dispositif de traitement (201) pour un système informatique parallèle (200), dans lequel le système informatique parallèle (200) comprend une pluralité de dispositifs de traitement (201) pour effectuer une application, comportant une ou plusieurs opérations collectives, dans lequel le dispositif de traitement (201) est configuré pour :
obtenir un résultat de traitement local, dans lequel un résultat de traitement global d'une opération collective dépend des résultats de traitement local de la pluralité de dispositifs de traitement (201) ; et
distribuer le résultat de traitement local du dispositif de traitement (201) à un ou plusieurs des autres dispositifs de traitement (201), si :
(a) il est certain que le résultat de traitement global de l'opération collective est basé uniquement sur le résultat de traitement local du dispositif de traitement (201), ou
(b) une probabilité que le résultat de traitement global de l'opération collective soit basé uniquement sur le résultat de traitement local du dispositif de traitement (201) est supérieure à une valeur seuil de probabilité, ou
(c) il est certain que le résultat de traitement global de l'opération collective est basé uniquement sur le résultat de traitement local du dispositif de traitement (201) et sur un autre résultat de traitement local d'un autre dispositif de traitement (201) de la pluralité de dispositifs de traitement (201) .

2. Dispositif de traitement (201) selon la revendication 1, configuré en outre pour diffuser le résultat de traitement local du dispositif de traitement (201) aux autres dispositifs de traitement (201), s'il est certain que le résultat de traitement global de l'opération collective est basé sur le résultat de traitement local du dispositif de traitement (201) .

3. Dispositif de traitement (201) selon la revendication 2, dans lequel l'opération collective est une opération « ET » logique ou au niveau du bit ou une opération « OU » logique ou au niveau du bit.

4. Dispositif de traitement (201) selon la revendication 1, dans lequel l'opération collective est une opération « XOR » logique ou au niveau du bit, et dans lequel le dispositif de traitement (201) est en outre configuré pour diffuser le résultat de traitement local du dispositif de traitement (201) aux autres dispositifs de traitement (201), s'il est certain que le résultat de traitement global de l'opération collective est basé uniquement sur le résultat de traitement local du dispositif de traitement (201) et sur le résultat de traitement local ultérieur du dispositif de traitement ultérieur (201).

5. Dispositif de traitement (201) selon la revendication 4, configuré en outre pour recevoir le résultat de traitement local supplémentaire du dispositif de traitement supplémentaire (201) et pour effectuer l'opération « XOR » logique ou au niveau du bit sur la base du résultat de traitement local du dispositif de traitement (201) et du résultat de traitement local supplémentaire du dispositif de traitement supplémentaire (201).

6. Dispositif de traitement (201) selon la revendication 1, configuré en outre pour distribuer le résultat de traitement local du dispositif de traitement (201) à un sous-ensemble sélectionné (203) des autres dispositifs de traitement (201) pour effectuer l'opération collective avec le sous-ensemble (203) sélectionné des autres dispositifs de traitement (201), dans lequel, pour chaque dispositif de traitement (201) du sous-ensemble (203) sélectionné des autres dispositifs de traitement (201), une probabilité que le résultat global de l'opération collective soit basé uniquement sur le résultat de traitement local du dispositif de traitement (201) est supérieur à une valeur seuil de probabilité.

7. Dispositif de traitement (201) selon la revendication 6, dans lequel le système informatique parallèle (200) est configuré pour ajuster le sous-ensemble sélectionné (203) pendant un temps d'exécution de l'application.

8. Dispositif de traitement (201) selon la revendication 6 ou 7, configuré en outre pour stocker, pour chaque opération collective de l'application, le résultat global de traitement de l'opération collective et/ou un identifiant du dispositif de traitement (201) fournissant le résultat global de traitement de l'opération collective.

9. Dispositif de traitement (201) selon la revendication 8, configuré en outre pour déterminer la probabilité que le résultat global de l'opération collective soit basé uniquement sur le résultat de traitement local du dispositif de traitement (201) sur la base d'une comparaison entre le résultat de traitement local et un ou plusieurs résultats de traitement global stockés pour une ou plusieurs opérations collectives précédentes de l'application.

10. Dispositif de traitement (201) selon l'une quelconque des revendications 6 à 9, dans lequel l'opération collective est une opération de maximum pour obtenir un maximum des résultats de traitement local de la pluralité de dispositifs de traitement (201) ou une opération de minimum pour obtenir un minimum des résultats locaux de la pluralité de dispositifs de traitement (201).

11. Dispositif de traitement (201) selon l'une quelconque des revendications précédentes, configuré en outre pour exécuter une boucle itérative et pour terminer la boucle itérative sur la base d'une déclaration conditionnelle dépendant du résultat de traitement global de l'opération collective.

12. Dispositif de traitement (201) selon la revendication 11, configuré en outre pour diffuser le résultat de traitement local du dispositif de traitement (201) aux autres dispositifs de traitement (201), s'il est certain que le résultat de traitement global de l'opération collective est basé uniquement sur le résultat de traitement local du dispositif de traitement (201) et le résultat de traitement global de l'opération collective amène le dispositif de traitement (201) à terminer la boucle itérative.

13. Système informatique parallèle (200) comprenant une pluralité de dispositifs de traitement (201) selon l'une quelconque des revendications précédentes.

14. Système informatique parallèle (200) selon la revendication 13, dans lequel la pluralité de dispositifs de traitement (201) sont configurés pour définir une topologie arborescente.

15. Procédé (900) pour effectuer une application, comportant une ou plusieurs opérations collectives, dans un système informatique parallèle (200) ayant une pluralité de dispositifs de traitement (201), dans lequel, pour chaque dispositif de traitement (201), le procédé (900) comprend les étapes suivantes :
obtention (901) d'un résultat de traitement local, dans lequel un résultat de traitement global d'une opération collective dépend d'un ou plusieurs des résultats de traitement local de la pluralité de dispositifs de traitement (201) ; et
distribution (903) du résultat de traitement local du dispositif de traitement (201) à un ou plusieurs des autres dispositifs de traitement (201), si :
(a) il est certain que le résultat de traitement global de l'opération collective est basé uniquement sur le résultat de traitement local du dispositif de traitement (201), ou
(b) une probabilité que le résultat de traitement global de l'opération collective soit basé uniquement sur le résultat de traitement local du dispositif de traitement (201) est supérieure à une valeur seuil de probabilité, ou
(c) il est certain que le résultat de traitement global de l'opération collective est basé uniquement sur le résultat de traitement local du dispositif de traitement (201) et sur un autre résultat de traitement local d'un autre dispositif de traitement (201) de la pluralité de dispositifs de traitement (201) .
